Europäisches Patentamt

**European Patent Office**

**Office européen des brevets**

(11) Veröffentlichungsnummer: **0 004 354**
**B1**

(12) **EUROPÄISCHE PATENTSCHRIFT**

(45) Veröffentlichungstag der Patentschrift:
**14.07.82**

(21) Anmeldenummer: **79100804.8**

(22) Anmeldetag: **16.03.79**

(51) Int. Cl.³: **F 15 B 9/08,** A 01 B 63/111,
G 05 D 1/00

(54) **Hydraulische Anstellvorrichtung mit Rückführungseinrichtung.**

(30) Priorität: **17.03.78 DE 2811585**

(43) Veröffentlichungstag der Anmeldung:
**03.10.79 Patentblatt 79/20**

(45) Bekanntmachung des Hinweises auf die Patenterteilung:
**14.07.82 Patentblatt 82/28**

(84) Benannte Vertragsstaaten:
**FR GB IT**

(56) Entgegenhaltungen:
**DE-B-2 751 449**
**GB-A-1 374 756**
**US-A-2 970 575**
**US-A-2 984 213**
**US-A-3 583 285**

(73) Patentinhaber: **Mannesmann Rexroth GmbH,**
**Postfach 340 Jahnstrasse 3 - 5, D-8770 Lohr/Main (DE)**

(72) Erfinder: **Bartholomäus, Reiner, Weinbergstrasse 17,**
**D-8781 Neuendorf (DE)**
Erfinder: **Bernhardt, Karl-Heinz, Finkenstrasse 13,**
**D-8770 Lohr/Main (DE)**
Erfinder: **Eberhard, Wolfgang, Eichenstrasse 2,**
**D-8770 Lohr/Main (DE)**
Erfinder: **Kokus, Hans-Dieter, Ewaldstrasse 44,**
**D-5216 Niederkassel (DE)**
Erfinder: **Lembke, Herbert, Ostlandstrasse 34,**
**D-8770 Lohr/Main (DE)**
Erfinder: **Schulte, Heinz, Eichholzstrasse 19,**
**D-8772 Marktheidenfeld (DE)**

## Hydraulische Anstellvorrichtung mit Rückführungseinrichtung

Die Erfindung betrifft eine hydraulische Anstellvorrichtung mit Rückführungseinrichtung, wobei letztere einen dauernden Soll-Istwertvergleich vornimmt entsprechend dem Oberbegriff des Anspruches 1.

Nach dem US-Patent-Nr. 2 970 575 ist es bekannt, den Steuerdruck zur Betätigung des Steuerventils durch einstellbare Drosselstellen festzulegen, wobei die eine Drosselstelle von Hand einzustellen ist und die andere von dem bewegten Teil des Arbeitszylinders, und zwar in Wirkrichtung der Einstellung der von Hand einzustellenden Drosselstelle. Damit steht die Einstellung der mit dem bewegten Teil des Arbeitszylinders in Wirkverbindung stehenden Drosselstelle in unmittelbarer Abhängigkeit von der jeweiligen Lage des bewegten Teiles des Arbeitszylinders. Das bewegte Teil des Arbeitszylinders kann sich demnach nur um einen solchen Betrag bewegen, bis die Einstellung der mit diesem in Wirkverbindung stehenden Drosselstelle der Einstellung der von Hand einzustellenden Drosselstelle entspricht. Die mit den einstellbaren Drosselstellen zusammenwirkenden Drosseln werden bei dieser bekannten Vorrichtung von einem Spalt zwischen den Steuerkolbenenden des Steuerventils für den Arbeitszylinder und der Führungsbohrung im Steuerventilgehäuse für den Steuerkolben gebildet. Dadurch, daß sich bei der Schaltbewegung des Steuerkolbens auch die die Drosselstelle bildende Spaltlänge ändert, ändert sich auch der Durchflußwiderstand und damit auch der Steuerdruck auf beiden Seiten des Steuerkolbens. Eine genaue Positionierung des beweglichen Teiles des Arbeitszylinders ist dadurch erschwert. Ferner kann bei dieser bekannten Vorrichtung ausschließlich die Lage des beweglichen Teiles des Arbeitszylinders als Rückführungsgröße herangezogen werden.

Die Aufgabe der Erfindung besteht deshalb darin, eine Anstellvorrichtung zu schaffen, die neben einer genauen Positionierung des beweglichen Teiles des Arbeitszylinders auch noch die Kraft des beweglichen Teiles des Arbeitszylinders als Rückführungsgröße mit berücksichtigt.

Nach der Erfindung wird diese mit den kennzeichnenden Merkmalen des Anspruches 1 erreicht.

Weitere Merkmale der Erfindung ergeben sich aus den Unteransprüchen.

Zwei Ausführungsbeispiele der Erfindung sind in der Zeichnung schematisch dargestellt, und zwar für Anstellvorrichtungen von in der Landwirtschaft eingesetzten Bodenbearbeitungsgeräten, wie mit Traktoren verbundene lage- und kraftgeregelte Pflüge.

Es zeigt

Fig. 1 den schaltungstechnischen Aufbau der hydraulischen Anstellvorrichtung unter Verwendung einer konstanten Drosselstelle für beide Drosselstellenpaare,

Fig. 2 den schaltungstechnischen Aufbau der hydraulischen Anstellvorrichtung unter Verwendung von zwei konstanten Drosselstellen für beide Drosselstellenpaare und

Fig. 3 den konstruktiven Aufbau der von Hand betätigten den Sollwertgeber bildenden einstellbaren Drosselstelle nach Fig. 2.

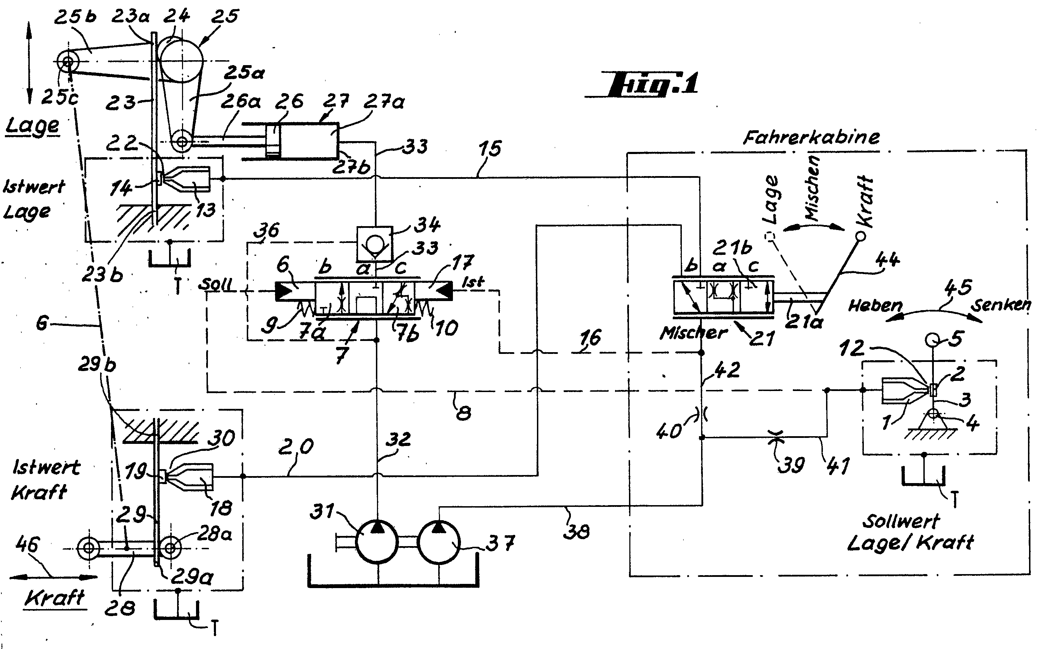

In der Abbildung 1 ist mit 1 die Düse und mit 2 die Prallplatte bezeichnet, die gemeinsam die Drosselstelle 12 bilden. Die Prallplatte 2 ist an einem Hebel 3 angeordnet, der mit seinem einen Ende an einen Schwenkpunkt 4 angelenkt ist und dessen freies Ende einen Handgriff 5 zum Verstellen des Abstandes der Prallplatte von der Düse 1 und damit zur Verstellung der Drosselstelle 12 aufweist. Die Düse 1 steht über eine Steuerleitung 8 mit dem einen Steuerraum 6 des Wegeventils 7 in Verbindung, dessen gezeigte Ausgangsschaltstellung a von den Zentrierfedern 9, 10 festgelegt ist.

Eine weitere Düse 13, die mit der Prallplatte 14 die Drosselstelle 22 bildet, steht über die Steuerleitung 15 sowie über das als 3-Wegeventil mit 3 Schaltstellungen a, b und c gebildete Mischventil 21 und der Steuerleitungsabschnitt 16 mit dem anderen Steuerraum 17 des Wegeventils 7 in Verbindung, und zwar in der Schaltstellung c und der Mischstellung a des Mischventils. In der gezeigten Schaltstellung b des Mischventils ist die Verbindung der Steuerleitung 15 mit dem Steuerleitungsabschnitt 16 unterbrochen und damit auch die Verbindung zum Steuerraum 17 des Wegeventils 7.

Eine weitere Düse 18, die mit der Prallplatte 19 die Drosselstelle 30 bildet, steht über die Steuerleitung 20 ebenfalls über das Mischventil 21 und den Steuerleitungsabschnitt 16 mit dem Steuerraum 17 des Wegeventils 7 in Verbindung, und zwar in der gezeigten Schaltstellung b und der Mischstellung a des Mischventils 21. Die mit der Düse 13 die Drosselstelle 22 bildende Prallplatte 14 ist an einen mit dem einen Ende 23b fest eingespannten Federstab 23 befestigt, dessen freies Ende 23a an einer Exzenterscheibe 24 eines Winkelhebels 25 kraftschlüssig anliegt. Der Hebelarm 25a des Winkelhebels ist an der Kolbenstange 26 des Anstellzylinders 27 angelenkt. Damit wird der Drosselquerschnitt der Drosselstelle 22 und damit auch der zwischen dieser Drosselstelle und der von der fest eingestellten Drossel 40 gebildeten konstanten Drosselstelle sich einstellende Steuerdruck von der Lage der Kolbenstange 26a bzw. des mit dieser verbundenen Kolbens 26 des Anstellzylinders 27 festgelegt. Der freie Hebelarm 25b des Winkelhebels 25 steht mit seiner Anlenkstelle 25c über ein nicht näher dargestelltes Gestänge G mit dem Unterlenker 28 für ein Bodenbearbeitungsgerät in Verbindung. Der Unterlenker 28 ist um die federnd eingespannte Drehachse 28a schwenkbar, so daß die an diesem wirkende Kraft als Verschiebeweg entsprechend dem Doppelpfeil 46 auf das freie Ende 29a des am Ende 29b fest eingespannten die Prallplatte 19 tragenden Federstabes 29 übertragen wird und den Drosselquerschnitt der von der Prallplatte 19 und Düse 18 gebildeten Drosselstelle 30 festgelegt. Die von dem Bodenbearbeitungsgerät auf den Federstab 29 übertragene Anstellkraft ist abhängig von der jeweiligen Lage des Anstellzylinders 27 mit dem dieses Gerät über den Unterlenker 28, über nicht näher dargestellte Gestänge G sowie über den Winkelhebel 25 verbunden ist. Die Arbeitsflüssigkeit wird dem kolbenseitigen Zylinderraum 27a des Anstellzylinders 27 von der Pumpe 31 über die Druckleitung 32 sowie über das Wegeventil 7 und dem Arbeitsleitungsabschnitt 33 mit entsperrbarem Rückschlagventil 34 zugeführt. Bei Verwendung eines doppeltwirkenden Zylinders ist anstelle eines entsperrbaren Rückschlagventils ein Sperrblock vorzusehen. In der gezeigten Ausgangsschaltstellung a des Wegeventils 7 wird der von der Pumpe 31 geförderte Arbeitsflüssigkeitsstrom über das Wegeventil 7 dem Tank T drucklos rückgeführt. Der Arbeitsleitungsabschnitt 33 ist in dieser Schaltstellung des Steuerventils 7 von der Druckleitung 32 getrennt. Der nicht näher dargestellte Steuerraum des Aufsteuerkolbens des entsperrbaren Rückschlagventils 34 steht über die Steuerleitung 36 mit der Druckleitung 32 in Verbindung. Solange die Arbeitsflüssigkeit über das Steuerventil 7 in dessen gezeigten Ausgangsstellung a drucklos zum Tank T zurückströmt, ist die Steuerleitung 36 ebenfalls drucklos, so daß das entsperrbare Rückschlagventil 34 seine geschlossene Stellung infolge der über den Winkelhebel auf den Anstellzylinder in Richtung dessen Boden 27b wirkenden äußeren Last des Bodenbearbeitungsgerätes einnimmt.

Mit der Pumpe 31 zur Lieferung der Arbeitsflüssigkeit ist die Pumpe 37 gekoppelt, die die Steuerflüssigkeit zur Betätigung des Steuerventils 7 liefert. Die Druckleitung 38 der Pumpe 37 führt zu den die konstanten Drosselstellen bildenden fest eingestellten Drosseln 39 und 40.

Die Drossel 39 steht über den Steuerleitungsabschnitt 41 mit der Drosselstelle 12 in Wirkverbindung und bildet mit dieser eine Funktionseinheit. Je nach dem Drosselquerschnitt der Drosselstelle 12 baut sich in dem Steuerleitungsabschnitt 41 ein mehr oder weniger großer Steuerdruck auf, der über die Steuerleitung 8 den Steuerraum 6 des Steuerventils 7 beaufschlagt und den Steuerkolben 7a des Steuerventils 7 in Richtung dessen Schaltstellung b belastet, und zwar gegen die Kraft der Zentrierfeder 10.

Die Drossel 40 steht über den Steuerleitungsabschnitt 42 sowie über das Mischventil 21 und über die Steuerleitung 20 in der Schaltstellung b und a des Mischventils mit der Drosselstelle 30 und über die Steuerleitung 15 in der Mischstellung a bzw. in der Schaltstellung c des Mischventils 21 mit der Drosselstelle 22 in Wirkverbindung und bildet mit diesen Drosselstellen jeweils eine Funktionseinheit. Je nach Einstellung der Drosselstellen 22 und 30 sowie der Mischstellung a des Mischventils 21 baut sich in den Steuerleitungen 15, 20 ein mehr oder weniger großer Steuerdruck auf, der über die mit dem Steuerleitungsabschnitt 42 verbundene Steuerleitung 16 den anderen Steuerraum 17 des Steuerventils 7 beaufschlagt und dessen Steuerkolben 7a in Richtung der Schaltstellung c beaufschlagt. Diese Druckbeaufschlagung wirkt gegen die Kraft der Zentrierfeder 9 bzw. zusätzlich gegen den im Steuerraum 6 herrschenden Steuerdruck des Drosselstellenpaares 39, 12.

Die Einstellung der Schaltstellung bzw. der Mischstellung des Mischventils 21 erfolgt über den Handhebel 44, der über die Schaltstange 21a mit dem Steuerkolben 21b verbunden ist.

Wird der Schalthebel 44 des Mischventils 21 aus der gezeigten Schaltlage in die gestrichelt dargestellte Schaltlage verschwenkt, nimmt das Mischventil seine Schaltstellung c ein, in der die Steuerleitung 15 mit dem Steuerleitungsabschnitt 42 verbunden und die Steuerleitung 20 unterbrochen ist. In dieser Schaltstellung bildet die konstante Drosselstelle 40 mit der einstellbaren Drosselstelle 22 eine Funktionseinheit. Wird nun über den Handgriff 5 und den Schwenkhebel 3 die Drosselstelle 12 auf einen höheren Wert und damit auch der zwischen konstanter Drosselstelle 39 und der Drosselstelle 12 herrschende Steuerdruck auf eine entsprechende Größe eingestellt, verschiebt sich der Steuerkolben 7a zunächst in Schaltstellung b, und zwar gegen die Kraft der Zentrierfeder 10 und verbindet die Druckleitung 32 mit dem Arbeitsleitungsanschluß 33, so daß die unter Pumpendruck stehende Arbeitsflüssigkeit das entsperrbare Rückschlagventil 34 öffnet und den Zylinderraum 27a beaufschlagt und dort den Kolben 28 in Richtung des Winkelhebels verschiebt. Damit wird über die Kolbenstange 26 der Winkelhebel 25 verschwenkt und gleichzeitig über die Exzenterscheibe 24 der die Prallplatte 14 tragende Federstab 23 um einen entsprechenden Betrag ausgelenkt und damit die Drosselstelle 22 entsprechend eingestellt. Sobald der in der Steuerleitung 15 zwischen veränderlicher Drosselstelle 22 und konstanter Drossel 40 sich einstellende über die Steuerleitung 16 dem Steuerraum 17 des Steuerventils 7 beaufschlagende Steuerdruck dem im Steuerraum 6 herrschenden Steuerdruck entspricht, verschiebt sich der zusätzlich unter der Kraft der Zentrierfeder 10 stehende Steuerkolben 7a des Steuerventils zurück in die gezeigte Ausgangsschaltstellung a, in der die Verbindung der Druckleitung 32 zum Arbeitsleitungsabschnitt 33 unterbrochen ist, so daß der Anstellzylinder 27 keine weitere Anstellbewegung mehr ausführt. Damit entspricht der am Handgriff 5 des Steuerhebels 3 eingestellte Steuerdruck einer bestimmten Stellung des Anstellzylinders 27 und damit des Winkelhebels 25. Wird nun der Steuerhebel 3 in Richtung »Senken« des Pfeiles 45 ausgelenkt, vergrößert sich der Querschnitt der Drosselstelle 12, so daß der Steuerdruck im Steuerleitungsabschnitt 8 und damit auch im Steuerraum 6 des Steuerventils 7 abnimmt. Nachdem im Steuerraum 17 noch der ursprünglich höhere Steuerdruck herrscht, verschiebt sich der Steuerkolben 7a in Richtung seiner Schaltstellung c, so daß nunmehr der Arbeitsleitungsabschnitt 33 mit dem Tank verbunden ist und über eine Drossel 7b auch die Druckleitung 32 mit dem Tank. Vor der Drossel 7b baut sich in der Druckleitung 32 und damit auch in der Steuerleitung 36 ein so hoher Druck auf, daß das entsperrbare Rückschlagventil 34 öffnet und den Zylinderraum 27a über das Steuerventil 7 in dessen Schaltstellung c mit dem Tank verbindet. Durch die am Hebel 25b wirkende äußere Last verschiebt sich nunmehr der Kolben 26 in Richtung des Anstellzylinders 27b. Damit wird aber gleichzeitig die Exzenterscheibe 24 um ihre Achse gedreht und der Querschnitt der Drosselstelle 22 über den mit der Exzenterscheibe in Wirkverbindung stehenden Federstab 23 vergrößert und damit der Steuerdruck in der Steuerleitung 15 und über das Mischventil 21 in dessen Steuerstellung a oder c und die Steuerleitung 16 auch im Steuerraum 17 des Steuerventils 7 verringert. Sobald durch die Verschwenkung des Hebels 25 der Steuerdruck im Steuerraum 17 des Steuerventils soweit verringert ist, daß er demjenigen im Steuerraum 6 des Steuerventils 7 entspricht, nimmt der Steuerkolben 7 wieder seine Schaltstellung a ein, in der die Arbeitsflüssigkeit von der Pumpe 31 drucklos zurück zum Tank geleitet wird und die Verbindung des Arbeitsleitungsabschnittes 33 zum Tank gesperrt ist. Da gleichzeitig der Steuerdruck in der Steuerleitung 36 sich auf den Tankdruck verringert, nimmt das entsperrbare Rückschlagventil seine geschlossene Stellung ein, so daß eine weitere Anstellbewegung des Anstellzylinders 27 wirkungsvoll unterbunden ist.

Wird der Betätigungshebel 44 aus der gestrichelten Schaltlage in die dargestellte Schaltlage verschoben, befindet sich das Mischventil in der gezeigten Schaltstellung b, in der der Steuerleitungsabschnitt 42 mit der Steuerleitung 20 verbunden ist, während die Verbindung des Steuerleitungsabschnittes 42 mit der Steuerleitung 15 unterbrochen ist. Somit wirkt im Steuerraum 17 des Steuerventils 7 der Steuerdruck, der sich in der Steuerleitung 20 entsprechend dem Betrag der Drosselstelle 30 einstellt. Dieser Steuerdruck wird bestimmt von der Kraft des über das Gestänge G mit dem Hebelarm 25b in Verbindung stehenden Arbeitsgerätes beispielsweise eines Pfluges, die dieses über den Unterlenker 28 und federnd eingespannte Drehachse 28a am freien Ende 29a des Federstabes 29 ausübt. Bei einem Pflug als Arbeitsgerät ist die angreifende Kraft von der Arbeitstiefe des Pfluges abhängig und damit von der Lage des Anstellzylinders 27. Zur Konstanthaltung der an der Drosselstelle 12 über den Steuerdruck eingestellten Kraft muß das Arbeitsgerät jeweils so höhenverstellt werden, daß die an diesem wirkende Kraft über die Drosselstelle 30 einen solchen Steuerdruck erzeugt, der dem an der Drosselstelle 12 eingestellten Steuerdruck entspricht.

Wird nun das Mischventil in die Mischstellung a verschoben, wird mit dem Steuerleitungsabschnitt 42 sowohl die Steuerleitung 15 als auch die Steuerleitung 20 verbunden. Im Steuerraum 17 des Steuerventils 7 wirkt somit jeweils der höhere an der Drosselstelle 22 oder 30 anstehende Steuerdruck. Damit ergibt sich die Möglichkeit, sowohl die Lage des Arbeitsgerätes als auch die am Arbeitsgerät angreifende Kraft entsprechend dem an der Drosselstelle 12 eingestellten Wert zu begrenzen, wobei sich das Verhältnis aus Lage und Kraft aus der Stellung des Mischventils 21 im Schaltbereich a ergibt.

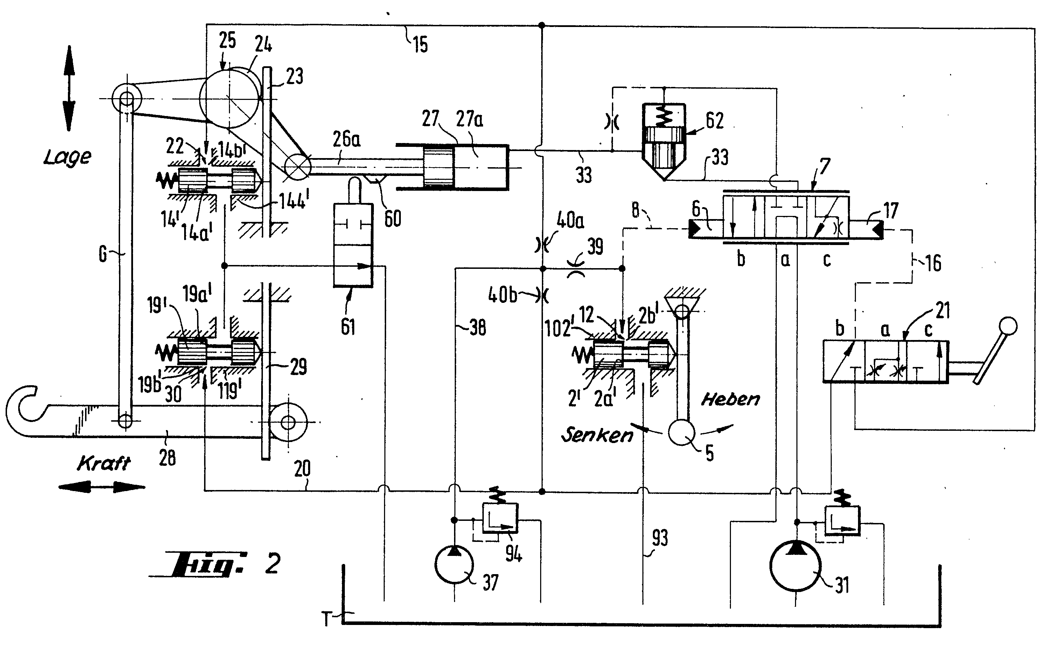

Die hydraulische Anstellvorrichtung nach Fig. 2 unterscheidet sich von derjenigen nach Fig. 1 zunächst im schaltungstechnischen Aufbau. Dieser besteht darin, daß bei der hydraulischen Anstellvorrichtung nach Fig. 2 jede der beiden von der Anstellvorrichtung unmittelbar betätigten einstellbaren Drosselstellen 22, 30 eine feste Drosselstelle 40a, 40b zugeordnet ist und die Steuerflüssigkeit von der Steuerflüssigkeitspumpe 37 über die Steuerleitung 38 den beiden festen Drosselstellen 40a, 40b unmittelbar zugeführt ist. Dies gewährleistet, daß an jedem Drosselstellenpaar 22, 40a; 30, 40b dauernd der Steuerdruck ansteht, der sich auf Grund der Einstellung der betreffenden einstellbaren Drosselstellen 22, 30 ergibt, und zwar unabhängig von der jeweiligen Stellung des Mischventils 21.

Ein weiterer Unterschied besteht darin, daß die einstellbaren Drosseln 12, 22, 30 nach Fig. 2 nicht aus Düse und Prallplatte wie bei dem Ausführungsbeispiel nach Fig. 1 bestehen, sondern aus Steuerkolben 2', 14', 19', deren Steuerkanten 2a', 14a', 19a' mit Steueröffnungen 2b', 14b', 19b' in den Ventilgehäusen 102', 114', 119' zusammenwirken. Diese Steueröffnungen können selbstverständlich auch als Ringkanäle mit einer entsprechenden Steuerkante oder als Steuerfenster ausgebildet sein. Eine solche Ausbildung der Drosselstellen hat vor allem den Vorteil, daß keine Verschmutzungsgefahr derselben durch in der Steuerflüssigkeit mitgeführte Schmutzpartikel besteht. Außerdem kann durch den Steuerkolben der Durchfluß in einfacher Weise völlig unterbrochen werden. Schließlich ergibt sich mit einer solchen Drosselstellenausbildung ein wesentlich größerer Anstellweg vom kleinsten bzw. 0-Durchflußquerschnitt bis zum größten Durchflußquerschnitt als bei von Prallplatte und Düse gebildeten Drosselstellen. Dadurch kann ohne Zwischenschaltung eines Untersetzungsgestänges die Auslenkung der Anstellvorrichtung bzw. der Handbetätigungsvorrichtung unmittelbar auf den Steuerkolben der Drosselstelle übertragen werden. Ein längerer Anstellweg des beweglichen Teiles der Drosselstelle gewährleistet darüber hinaus eine stabilere Ansteuerung der jeweiligen Steuerstellung.

Ein weiterer Unterschied im Aufbau der hydraulischen Anstellvorrichtung nach Fig. 2 gegenüber dem nach Fig. 1 besteht darin, daß die zum Tank T zurückströmende Steuerflüssigkeit von den beiden mit der Anstellvorrichtung in Wirkverbindung stehenden einstellbaren Drosselstellen 22, 30 ein Zwei-Wegeventil 61 geführt ist, das von einem mit der Kolbenstange 26a verbundenen Schaltnocken 60 zu betätigen ist. Bei Betätigung des Zwei-Wegeventils durch den Schaltnocken wird die Verbindung der Drosselstellen zum Tank unterbrochen, so daß sich in den Steuerleitungen 15, 20 der von der Steuerflüssigkeitspumpe 37 erzeugte maximale Steuerdruck einstellt. Dieser Steuerdruck wirkt über das Mischventil 21 im Steuerraum 17 des Steuerschiebers 7 in Richtung des Steuerraumes 6, in dem über den Handhebel an der Drosselstelle 12 eingestellte Steuerdruck herrscht. Da dieser im Steuerraum 6 herrschende Steuerdruck nicht größer als der maximale Steuerdruck sein kann, wird in der geschlossenen Schaltstellung des Zwei-Wegeventils 61 mit Sicherheit das Steuerventil von den Zentrierfedern in die Mittelstellung a verschoben, in der die Arbeitsleitung 33 von der Pumpe 31 getrennt ist und damit eine weitere Zufuhr von Arbeitsflüssigkeit in den Zylinderraum 27a des Arbeitszylinders 27 unterbrochen ist. Dadurch wird in einfacher Weise der maximale Hub des Arbeitszylinders 27 bzw. die obere Höhenlage des Gestänges G begrenzt. Durch das in der Arbeitsleitung 33 zwischengeschaltete Logikelement 62 wird in der Mittelstellung a des hydraulisch ansteuerbaren Steuerventils 21 ein weitgehend leckölfreier Abschluß des Arbeitszylinderraumes 27a gewährleistet.

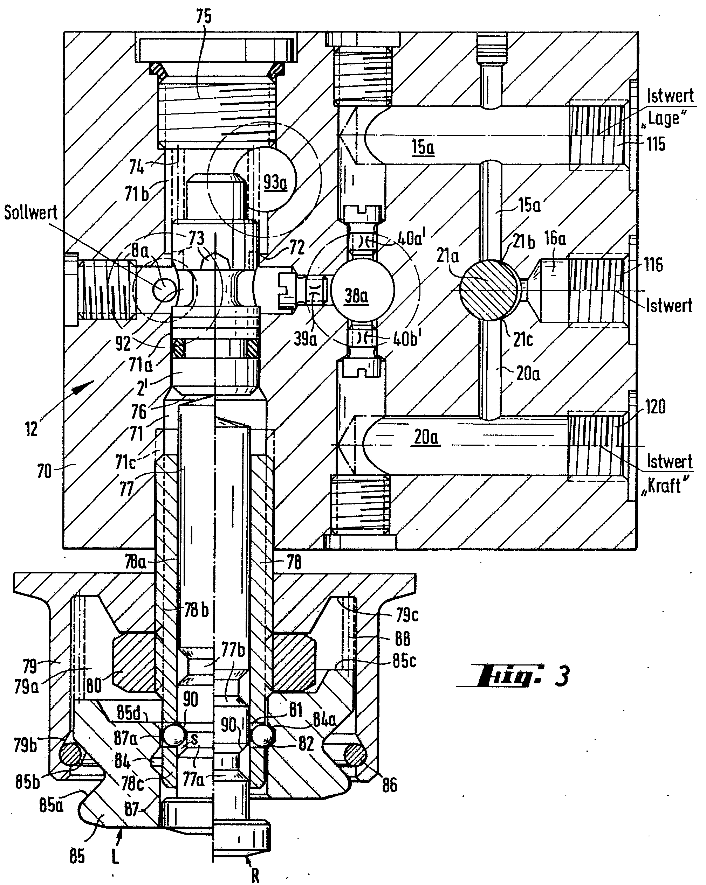

Die in Fig. 3 im Schnitt dargestellte den Sollwertgeber bildende und von Hand einstellbare Drosselstelle 12 besteht aus einem Gehäusekörper 70 mit einer Stufenbohrung 71 sowie einem im mittleren Bereich 71a der Stufenbohrung geführten Steuerkolben 2' mit Steuernuten 73, die mit einer umlaufenden Steuerkante 72 im Erweiterungsbereich 71b der Stufenbohrung zusammenwirken. In diesem Erweiterungsbereich ist eine Druckfeder 74 angeordnet, die sich mit dem einen Ende am Verschlußstopfen 75 der Stufenbohrung abstützt und mit ihrem anderen Ende am Steuerkolben 2'. An seiner der Druckfeder 74 abgewandten Stirnseite 76 stützt sich der Steuerkolben 2' an dem Betätigungsstift 77 ab, der in der Längsbohrung 78a einer Gewindespindel 78 axial geführt ist. Die Gewindespindel ist in dem mit einem Innengewinde versehenen Bereich 71c der Stufenbohrung einstellbar angeordnet. An ihrem freien Ende 78b ist ein Einstellknopf 79 mittels der Kontermutter 80 befestigt. Am äußeren gewindelosen Ende 78c weist die Gewindespindel radial verlaufende Durchgangsbohrungen 81 zur Aufnahme und radialen Führung von Arretierkugeln 82 auf. Die Arretierkugeln 82 wirken neben den Radialbohrungen 81 in der Gewindespindel mit umlaufenden Nuten 77a, 77b des Betätigungsstiftes in der Durchgangsbohrung 87 zusammen oder mit der umlaufenden Nut 84 in der Durchgangsbohrung 87 eines in einer Ausnehmung 79a des Einstellknopfes 79 geführten Verriegelungsknopfes 85. An seinem äußeren Umfang weist der Verriegelungsknopf eine umlaufende Ausnehmung 85a auf, denen eine Begrenzungsfläche 85b mit einem in der Ausnehmung 79b des Einstellknopfes eingelassenen Sprengring 86 als axialen Anschlag zusammenwirkt. Der Verriegelungsknopf ist mittels der Druckfeder 88, die sich mit ihrem einen Ende am Boden 79c der Ausnehmung des Einstellknopfes und mit ihrem anderen Ende an der Stirnfläche 85c des Verriegelungsknopfes abstützt, in Richtung des Sprengringes 86 belastet. Dadurch, daß die Flanke 84a der umlaufenden Nut 84 des Verriegelungsknopfes schräg verläuft, werden die Arretierkugeln 82 von der Kraft der Druckfeder 88 über den Verriegelungsknopf radial nach innen belastet. Wird der Betätigungsstift 77 aus seiner entrasteten Stellung R (rechte Hälfte) in Richtung des Steuerkolbens 2' verschoben, rasten die Arretierkugeln 82 infolge ihrer radial nach innen gerichteten Belastung in die umlaufende Nut 77a ein, so daß der Betätigungsstift mit der Gewindespindel in axialer Richtung formschlüssig verbunden ist. Gleichzeitig verschiebt sich der Verriegelungsknopf infolge der Belastung durch die Druckfeder 88 weiter in Richtung des Sprengringes 86 und verriegelt hierbei mit seiner zylindrischen Fläche 87a die radialen Bohrungen 81 in der Gewindespindel entsprechend der linken Stellung L des Verriegelungsknopfes (linke Hälfte). Ein Herausspringen der Arretierkugeln aus der umlaufenden Nut 77a des Betätigungsstiftes ist dadurch wirkungsvoll unterbunden. Dadurch, daß der Betätigungsstift über den Steuerkolben 2' von der Druckfeder 74 axial nach außen belastet ist, liegt die schräg verlaufende Flanke 90 der umlaufenden Nut 77a des Betätigungsstiftes an den Arretierkugeln kraftschlüssig an. Gleichzeitig erhalten die Arretierkugeln 82 durch die schräg verlaufende Flanke 90 eine nach außen gerichtete radiale Belastung. Dies ergibt eine zwangsläufige Entrastung des Betätigungsstiftes, sobald der Verriegelungsknopf soweit entgegen der Kraft der Druckfeder 88 nach innen verschoben ist, daß dessen umlaufende Nut 84 im Bereich der Radialbohrungen 81 der Gewindespindel liegt. Diese Lage ist erreicht, wenn die inneren Stirnflächen 85d des Verriegelungsknopfes an der Kontermutter 80 anliegt. Die Arretierkugeln werden in dieser Lage des Verriegelungsknopfes von der schräg verlaufenden Flanke 90 der umlaufenden Nut 77a des Betätigungsstiftes 77 in die umlaufende Nut 84 des Verriegelungsknopfes gedrückt. Durch die damit verbundene Entriegelung des Betätigungsstiftes wird dieser von dem unter der Kraft der Druckfeder 74 stehenden Steuerkolben 2' in seine entriegelte Lage entsprechend der Lage R (rechte Hälfte) verschoben. In dieser Lage nimmt der Steuerkolben 2' seine Schließstellung ein, in der die Verbindung zwischen Steuerraum 92 und Erweiterungsbereich 71b der Stufenbohrung 71 unterbrochen ist. Da der Steuerraum 92 über die als Düsenkörper 39a ausgebildete feste Drosselstelle 39 und den Steuerkanal 38a sowie Steuerleitung 38 mit der Steuerflüssigkeitspumpe 37 und über den Steuerkanal 8a sowie Steuerleitung 8 mit dem Steuerraum 6 des Steuerventils 7 verbunden ist und andererseits der Erweiterungsbereich 71b der Stufenbohrung über den Kanalabschnitt 93a sowie Leitung 93 mit dem Tank T, baut sich im Steuerraum 92 der von der Steuerflüssigkeitspumpe 37 erzeugte von der Einstellung des Druckbegrenzungsventils 94 festgelegten maximale Druck auf, der über die Steuerleitung 8 auch im Steuerraum 6 des Steuerventils 7 wirkt und dieses in die Schaltstellung b verschiebt, in der der Zylinderraum 27a, mit der Arbeitsflüssigkeitspumpe 31 verbunden ist. Dies bewirkt ein Ausfahren des Kolbens 26 mit Kolbenstange 26a und damit ein Heben des Gestänges G bis in seine von der Stellung des mit dem 2-Wegeventil 61 zusammenarbeitenden Schaltnockens 60 festgelegte obere Stellung. Wird der Betätigungsstift wieder in seine Arretierstellung eingedrückt, nimmt der Steuerkolben 2' wieder seine von der Einstellung der Gewindespindel 78 festgelegte Drosselstellung ein. Damit beispielsweise die Höhenlage des Gestänges G kurzzeitig auf ein niedriges Niveau eingestellt werden kann, ohne hierbei die Gewindespindelstellung über den Einstellknopf verändern zu müssen, ist zwischen der umlaufenden Nut 77a des Betätigungsstiftes 77 und den Arretierkugeln 82 ein axiales Spiel s vorgesehen, um das sich und damit auch der Steuerkolben gegen die Kraft der Druckfeder 74 weiter in Richtung des Verschlußstopfens 75 verschieben lassen, so daß sich der Steuerspalt zwischen Steuernuten 73 und Steuerkante 74 um diesen Bereich vergrößert und der Steuerdruck im Steuerraum 92 entsprechend vermindert. Sobald die hierfür am Betätigungsstift wirkende äußere Kraft wieder weggenommen wird, nimmt der Betätigungsstift wieder seine von der Gewindespindel eingestellte Lage ein, in dem sich die Flanke 90 der umlaufenden Nut 77a an den Arretierkugeln anlegt. Die weitere umlaufende Nut 77b dient zur Festlegung des Betätigungsstiftes in einer Lage, in der mit Sicherheit der Steuerkolben die Verbindung des Steuerraumes 92 zum mit dem Tank in Verbindung stehenden erweiterten Bereich 71b der Stufenbohrung zur Gewährleistung der oberen Lage des Gestänges G unterbricht.

Mit dem Gehäusekanal 38a, der einen Teilbereich der zur Steuerflüssigkeitspumpe 37 führenden Steuerleitung 38 bildet, stehen neben dem die Drosselstelle 39 bildenden Düsenkörper 39a auch die die konstanten Drosselstellen 40a, 40b bildenden Drosselkörper 40a', 40b' in Verbindung. Austrittsseitig stehen diese Drosselkörper 40a', 40b' mit Kanalabschnitte 15a, 20a in Verbindung, die ihrerseits zu den Leitungsanschlüssen 115, 120 für die zu den einstellbaren Drosselstellen 22, 30 führenden Steuerleitungen 15, 20 führen und zu dem drehbaren Teil 21a des als Drehschieber ausgebildeten Mischventils 21. Vom drehbaren Teil 21a führt ein Kanalabschnitt 16a zum Anschluß 116 für die zum Steuerraum 17 des Steuerventils 21 führenden Steuerleitung 16.

In der gezeigten Mittellage des drehbaren Teiles 21a des Mischventils steht der Kanalabschnitt 16a sowohl mit dem Kanalabschnitt 15a als auch mit dem Kanalabschnitt 20a in Verbindung, wobei die Steuerspalte 21b, 21c für beide Verbindungen gleich sind. Demnach stellt sich im Kanalabschnitt 16a und damit auch im Steuerraum 17 des Steuerventils 7 etwa der sich aus den beiden in den Steuerkanälen 15a, 20a wirkenden Steuerdrücken ergebende Mittelwert ein.

Wird der drehbare Teil 21a des Mischventils in die eine oder andere Richtung verdreht, ändert sich entsprechend auch der Wert des Mischdruckes. In den jeweiligen Endstellungen des drehbaren Teiles 21a des Mischventils 21 ist jeweils nur eine Verbindung zwischen Kanalabschnitt 16a und den Kanälen 15a, 20a geöffnet. Demnach ist bei einer Verbindung des Kanalabschnittes 16a mit dem Kanal 15a, in der entsprechenden Endstellung des drehbaren Teiles des Mischventils die Verbindung zwischen Kanalabschnitt 16a und Kanal 20a geschlossen und umgekehrt. Im Steuerraum 17 des Steuerventils 7 herrscht demnach in den Endstellungen des Mischventils entweder der Steuerdruck im Bereich der Drosselstellenpaare 40a, 22 oder 40b, 30.

Das Gehäuse 70 für die den Sollwertgeber bildenden von außen einstellbare Drosselstelle 12 bildet gleichzeitig das Gehäuse für das Mischventil 21 und das Aufnahmegehäuse für die die konstanten Drosselstellen 40a, 40b bildenden Drosselkörper 40a', 40b'.

**Patentansprüche**

1. Hydraulische Anstellvorrichtung (25, 27, G) mit Rückführungseinrichtung, wobei jeweils eine einstellbare Drosselstelle (12, 22) mit einer konstanten Drosselstelle (39, 40) zusammenwirkt und der zwischen den Drosselstellenpaaren (12, 39; 22, 40) entsprechend der jeweiligen Einstellung der betreffenden einstellbaren Drosselstelle (12, 22) sich einstellende Druck den Steuerdruck für ein beidseitig hydraulisch betätigbares die Anstellvorrichtung steuerndes Steuerventil (7) bildet und der Steuerdruck des einen Drosselstellenpaares (12, 39) dem einen Steuerraum (6) und der Steuerdruck des anderen Drosselstellenpaares (22, 40) dem anderen Steuerraum (17) des Steuerventils als Rückführungssignal beaufschlagt und die eine einstellbare Drosselstelle (12) vorwählbar einstellbar ist und den Anstellbetrag der Anstellvorrichtung oder einem vom Anstellbetrag der Anstellvorrichtung abhängigen Wert festlegt und die andere einstellbare Drosselstelle (22) mit der Anstellvorrichtung in Wirkverbindung steht und den jeweiligen Anstellbetrag der Anstellvorrichtung oder einem vom Anstellbetrag der Anstellvorrichtung abhängigen Wert darstellt, dadurch gekennzeichnet, daß zwischen der mit der Anstellvorrichtung in Wirkverbindung stehenden einstellbaren Drossel (22) zur Bildung des vom betreffenden Steuerdruck gebildeten Rückführungssignals und dem anderen Steuerraum (17) des Steuerventils (7) ein Wegeventil (21) mit einer Mischstellung (a) für ein weiteres Rückführungssignal einer weiteren mit der Anstellvorrichtung mittelbar in Wirkverbindung stehenden einen weiteren Steuerdruck bildenden einstellbaren Drossel (30) angeordnet ist.

2. Hydraulische Anstellvorrichtung nach Anspruch 1, dadurch gekennzeichnet, daß den beiden mit der Anstellvorrichtung in wirkverbindung stehenden einstellbaren Drosseln (22, 30) eine gemeinsame konstante Drossel (40) zugeordnet ist und das Wegeventil (21) als 3-Wegeventil mit 3 Schaltstellungen (a, b, c) ausgebildet ist, in dessen einer Endstellung (c) die konstante Drossel (40) mit der einen einstellbaren Drossel (22) und in dessen anderen Endstellung (b) die konstante Drossel (40) mit der anderen einstellbaren Drossel (30) eine Funktionseinheit bildet und in dessen Zwischenstellung (a) die konstante Drossel (40) mit beiden einstellbaren Drosseln (22, 30) zu Funktionseinheiten verbunden ist, wobei die jeweilige Lage der Zwischenstellung (a) den Mischungsgrad der einstellbaren Drosseln (22, 30) zueinander bestimmt.

3. Hydraulische Anstellvorrichtung nach den Ansprüchen 1 oder 2, dadurch gekennzeichnet, daß die einstellbaren Drosselstellen (12, 20, 30) jeweils von einem Steuernuten oder Steuerkanten (73, Fig. 3) aufweisenden Steuerkolben (2', 14', 19') und einer oder mehreren ortsfesten Steueröffnungen (2b', 14b', 19b') gebildet sind, wobei zur Festlegung einer bestimmten den Steuerdruck festlegenden Steuerflüssigkeitsmenge die Steuernuten bzw. Steuerkanten mit den ortsfesten Steueröffnungen (2b', 14b', 19b') zusammenwirken und die Steuerkolben mit dem jeweiligen Betätigungsorgan (23, 24, 25; 29, 28) ein Wirkeinheit bilden.

4. Hydraulische Anstellvorrichtung nach Anspruch 3, dadurch gekennzeichnet, daß der Steuerkolben (14', 19') an einem einseitig angelenkten Hebel (23, 29) kraftschlüssig anliegt, dessen freies Ende über einen Exzenter (24) von der Anstellvorrichtung oder von der Kraft eines von der Anstellvorrichtung zu beeinflussenden Gerätes (28) zu verstellen ist.

5. Hydraulische Anstellvorrichtung nach Anspruch 4, dadurch gekennzeichnet, daß der Hebel von einem einseitig eingespannten Federstab (23, 29) gebildet ist.

6. Hydraulische Anstellvorrichtung nach den Ansprüchen 1 oder 2 und 3, dadurch gekennzeichnet, daß der Steuerkolben (2') für die vorwählbare einstellbare Drosselstelle (12) über einen mit einer Gewindespindel (78) drehfest verbundenen Einstellknopf (79) anstellbar ist, und die Anstellbewegung des Einstellknopfes über einen in der Gewindespindel axial verschiebbar und axial festlegbaren Betätigungsstift (77) auf den Steuerkolben (2') zu übertragen ist, der in Richtung des Betätigungsstiftes von einer Feder (74) belastet ist und die den Betätigungsstift in Verschieberichtung festlegenden Elemente (77a, 77b, 82, 78c, 81, 82, 85, 87a) ein axiales Spiel (s) zur begrenzten Axialverschiebung des Betätigungsstiftes entgegen der Federkraft aufweisen.

7. Hydraulische Anstellvorrichtung nach den Ansprüchen 1 oder 2 und 3, dadurch gekennzeichnet, daß die Abflußseite der mit der Anstellvorrichtung in Wirkverbindung stehenden einstellbaren Drosselstellen (22, 30) über ein von der Anstellvorrichtung zu betätigendes Zwei-Wegeventil (61) mit dem Tank in Verbindung steht bzw. stehen.

8. Hydraulische Anstellvorrichtung nach den Ansprüchen 1 oder 2, dadurch gekennzeichnet, daß jeder der beiden mit der Anstellvorrichtung in Wirkverbindung stehende einstellbaren Drosselstellen (22, 30) zur Zuführung der Steuerflüssigkeit eine konstante Drosselstelle (40a, 40b) zugeordnet ist (Fig. 2) und das 3-Wegeventil (21) zwischen dem anderen Steuerraum (17) des Steuerventils (7) und den Steuerleitungen (15, 20) zwischen den beiden Drosselstellenpaaren (22, 40a; 30, 40b) angeordnet ist.

## Claims

1. An hydraulic positioning device (25, 27, G) with a feedback arrangement, in which, at any particular time, an adjustable throttle point (12, 22) interacts with a constant throttle point (39, 40) and the pressure established between the pairs of throttle points (12, 39; 22, 40) according to the particular setting of the respective adjustable throttle point (12, 22) forms the control pressure for a control valve (7) which can be actuated hydraulically on both sides and which controls the positioning device, and the control pressure at one pair of throttle points (12, 39) is applied to one control space (6) of the control valve and the control pressure of the other pair of throttle points (22, 40) is applied to the other control space (17) of the control valve in the form of a feedback signal, and one adjustable throttle point (12) is preselectably adjustable and fixes the positioning travel of the positioning device or a value dependent on the positioning travel of the positioning device, and the other adjustable throttle point (22) is connected operatively to the positioning device and represents the particular positioning travel of the positioning device or a value dependent on the positioning travel of the positioning device, characterised in that located between the adjustable throttle (22) connected operatively to the positioning device, for forming the feedback signal formed by the respective control pressure, and the other control space (17) of the control valve (7) is a directional valve (21) with a mixing position (a) for a further feedback signal of a further adjustable throttle (30) operatively connected indirectly to the positioning device and forming a further control pressure.

2. An hydraulic positioning device according to claim 1 characterised in that a common constant throttle (40) is assigned to the two adjustable throttles (22, 30) connected operatively to the positioning device, and the directional valve (21) is designed as a 3-way valve with 3 switching positions (a, b, c), in one end position (c) of which the constant throttle (40) forms a functional unit with one adjustable throttle (22) and in the other end position (b) of which the constant throttle (40) forms a functional unit with the other adjustable throttle (30) and in the intermediate position (a) of which the constant throttle (40) is connected to both adjustable throttles (22, 30) to form functional units, the particular state of the intermediate position (a) determining the degree of mixing of the adjustable throttles (22, 30) with one another.

3. An hydraulic positioning device according to claims 1 or 2, characterised in that the adjustable throttle points (12, 20, 30) are each formed by a control piston (2', 14', 19') having control grooves or control edges (73, Fig. 3) and by one or more fixed control orifices (2b, 14b, 19b), and, to fix a specific quantity of control fluid determining the control pressure, the control grooves or control edges interact with the fixed control orifices (2b, 14b, 19b) and the control pistons forms an operative unit with the respective actuating member (23, 24, 25; 29, 28).

4. An hydraulic positioning device according to claim 3, characterised in that the control piston (14', 19') rests frictionally against a lever (23, 29) which is articulated at one end and the free end of which can be adjusted via an eccentric (24) by the positioning device or by the force of an appliance (28) to be influenced by the positioning device.

5. An hydraulic positioning device according to claim 4, characterised in that the lever is formed by a spring bar (23, 29) clamped at one end.

6. An hydraulic positioning device according to claims 1 or 2 and 3, characterised in that the control piston (2') for the preselectable adjustable throttle point (12) can be set via an adjusting knob (79) connected in a rotation-proof manner to a threaded spindle (78), and the positioning movement of the adjusting knob can be transmitted, via an actuating pin (77) axially displaceable and axially fixable in the threaded spindle, to the control piston (2') which is loaded in the direction of the actuating pin by a spring (74), and the elements (77a, 77b, 82, 78c, 81, 82, 85, 87a) fixing the actuating pin in the direction of displacement have an axial play (s) for a limited axial displacement of the actuating pin counter to the spring force.

7. An hydraulic positioning device according to claims 1 or 2 and 3, characterised in that the flow-off side (s) of the adjustable throttle points (22, 30) connected operatively to the positioning device is or are connected to the tank via a 2-way valve (61) to be actuated by the positioning device.

8. An hydraulic positioning device according to claims 1 or 2, characterised in that a constant throttle point (40a, 40b) is assigned, for supplying the control fluid, to each of the 2 adjustable throttle points (22, 30) connected operatively to the positioning device (Fig. 2), and the 3-way valve (21) is located between the other control space (17) of the control valve (7) and the control lines (15, 20) between the two pairs of throttle points (22, 40a; 30, 40b).

**Revendications**

1. Dispositif hydraulique de commande (25, 27, G) à rétroaction dans lequel un étranglement réglable (12, 22) respectif coopère avec un étranglement constant (39, 40) et dans lequel la pression qui s'établit entre les paires d'étranglements (12, 39; 22, 40) en fonction du réglage respectif de l'étranglement réglable (12, 22) correspondant constitue la pression de commande pour une soupape de commande (7) du dispositif de commande, pouvant être actionnée hydrauliquement de façon bilatérale, et la pression de commande de l'une des paires d'étranglements (12, 39) s'applique à l'unde des chambres de commande (6) tandis que la pression de commande de l'autre paire d'étranglement (22, 40) s'applique à l'autre chambre de commande (17) de la soupape de commande comme signal de rétroaction, et dans lequel un étranglement réglable (12) peut être réglé préalablement et détermine la valeur de commande du dispositif de commande ou une valeur qui dépend de la valeur de commande du dispositif de commande, et l'autre étranglement réglable (22) est en liaison effective avec le dispositif de commande et représente respectivement la valeur de commande du dispositif de commande ou une valeur qui dépend de la valeur de commande du dispositif de commande, dispositif caractérisé en ce que, entre l'étranglement réglable (22) en liaison effective avec le dispositif de commande, destiné à former le signal de rétroaction constitué par la pression de commande respective, et l'autre chambre de commande (17) de la soupape de commande (7) est disposé un distributeur (21) avec une position de mélange (a) pour un autre signal de rétroaction d'un étranglement rélement réglable (30) établissant une autre pression de commande, en communication effective indirecte avec le dispositif de commande.

2. Dispositif hydraulique de commande selon la revendication 1, caractérisé en ce que, avec les deux étranglements réglables (22, 30) en liaison effective avec le dispositif de commande est associé un étranglement constant commun (40), et que le distributeur (21) est constitué par un distributeur à trois voies avec trois positions de commande (a, b, c), dans une position d'extrémité (c) duquel l'étranglement constant (40) constitue une unité fonctionnelle avec l'un des étranglements réglables (22) dans une autre position d'extrémité (b) duquel l'étranglement constant (40) constitue une unité fonctionnelle avec l'autre étranglement réglable (30), et dans la position intermédiaire (a) duquel l'étranglement constant (40) est relié avec les deux étranglements réglables (22, 30) pour former des unités fonctionnelles, la position respective de la position intermédiaire (a) déterminant le degré de mélange des étranglements réglables (22, 30) l'un par rapport à l'autre.

3. Dispositif hydraulique de commande selon la revendication 1 ou 2, caractérisé en ce que les étranglements réglables (12, 20, 30) sont constituées respectivement par un piston de commande (2', 14', 19') comportant des rainures ou des bords de commande (73, fig. 3) et par une ou plusieurs ouvertures de commande fixes (2b, 14b, 19b), les rainures ou les bords de commande coopérant avec les ouvertures de commande fixes (2b, 14b, 19b) et les pistons de commande formant une unité fonctionnelle avec l'organe d'actionnement respectif (23, 24, 25 ; 29, 28) afin de déterminer une certaine quantité de liquide fixant la pression de commande.

4. Dispositif hydraulique de commande selon la revendication 3, caractérisé en ce que le piston de commande (14', 19') est appuyé par une force sur un levier (23, 29) articulé d'un côté, et dont l'extrémité libre peut être déplacée au moyen d'un excentrique (24) par le dispositif de commande ou par la force développée par un engin (28) sur lequel agit le dispositif de commande.

5. Dispositif hydraulique de commande selon la revendication 4, caractérisé en ce que le levier est constitué par une tige élastique (23, 29) placée sous précontrainte à une extrémité.

6. Dispositif hydraulique de commande selon l'une quelconque des revendications 1 à 3, caractérisé en ce que, pour l'étranglement réglable préalablement (12), le piston de commande (2') est commandé au moyen d'un bouton de réglage (79) associé avec une broche filetée (78) et lié en rotation à cette broche, le mouvement de commande du bouton de réglage étant transmis au piston de commande (2') au moyen d'une tige d'actionnement (77) pouvant se déplacer axialement dans la broche filetée, et pouvant être immobilisée axialement, ledit piston de commande subissant, dans la direction de la tige d'actionnement, l'effet d'un ressort (74), et les éléments (77a, 77b, 82, 78c, 81, 82, 85, ·87a), qui immobilise la tige d'actionnement dans le sens du déplacement, présentent un jeu axial (s) pour un déplacement axial limité de la tige d'actionnement contre la force du ressort.

7. Dispositif hydraulique de commande selon l'une quelconque des revendications 1 à 3, caractérisé en ce que le côté d'écoulement des étranglements réglables (22, 30) en liaison effective avec le dispositif de commande communique avec le réservoir par un distributeur à deux voies (61) actionné par le dispositif de commande.

8. Dispositif hydraulique de commande selon la revendication 1 ou 2, caractérisé en ce que chacun des deux étranglements réglables (22, 30) en communication effective avec le dispositif de commande est associé avec un étranglement constant (40a, 40b) pour délivrer le fluide de commande (fig. 2), le distributeur à trois voies (21) étant disposé entre l'autre chambre de commande (17) de la soupape de commande (7) et les conduites de commande (15, 20) entre les deux paires d'étranglements (22, 40a ; 30, 40b).

**Fig.1**

**Fig. 2**

Lage / Kraft / Heben / Senken

0 004 354

*Fig. 3*